# EUROPEAN PATENT APPLICATION

(11) **EP 1 051 015 A2**
(43) Date of publication of application: **08.11.2000**
(21) Application number: 00303458.4
(22) Date of filing: 25.04.2000
(51) Int. Cl.: H04M 1/725

(54) **Dictation function in a cellular telephone**

(30) Priority: 03.05.1999 US 303443
(71) Applicant: LUCENT TECHNOLOGIES INC., Murray Hill, New Jersey 07974-0636 (US)
(72) Inventor: Veschi, John P., Fogelsville, Pennsylvania 18051 (US)
(74) Representative: Buckley, Christopher Simon Thirsk

(57) **Abstract**

A wireless telephone dictation device includes a dictation mode in addition to an otherwise conventional wireless telephone mode. The dictation functionality of the wireless telephone dictation device is inconspicuous to those around the user of the device, and appears as if the device is a conventional wireless telephone. In a dictation mode, the wireless telephone dictation device records verbal passages from a user into an appropriate digital memory (or onto an analog cassette tape), under the control of buttons resembling those of a conventional wireless telephone (e.g., using various number keys of a twelve (12) digit alphanumeric keypad). The wireless telephone dictation device operates in an otherwise conventional fashion in a wireless telephone mode, allowing conventional wireless telephone (e.g., cellular telephone) functionality. A speech-to-text converter can be included to convert recorded verbal passages into text for display on an appropriate display. Preferably, the text display resembles that of a conventional wireless telephone. The wireless capability of the wireless telephone dictation device may be utilized to allow transfer of recorded dictation between wireless telephone dictation devices, or between a wireless telephone dictation device and a land-based dictation database.

## Description

### Field of the Invention

This invention relates generally to dictation systems. More particularly, it relates to the integration of a dictation device within a cellular telephone handset.

### Background of Related Art

Dictation devices are utilized in many ways in today's society. In an office setting, one person may find it convenient to verbalize instructions and/or passages for later transcription. Other persons may utilize a dictation device to record short messages for another person to hear at a later time. For instance, a member of a family may leave a short message to another member of the family for them to hear when they get home.

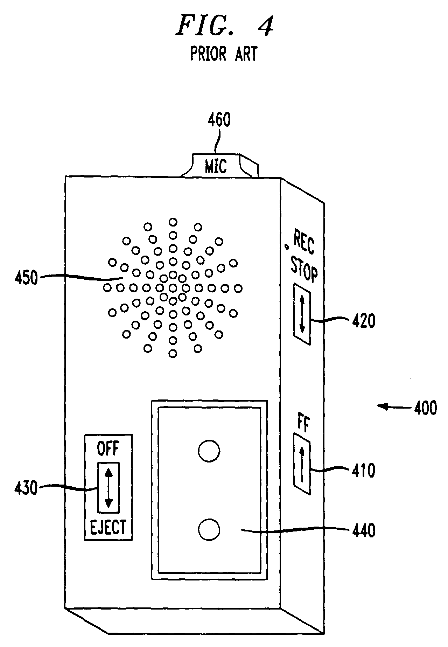

A conventional analog dictation device is shown in Fig. 4. the present invention relates to both analog and digital dictation.

In particular, in Fig. 4, a hand-held casing includes a speaker **450**, a microphone **460**, and a cassette tape **440** (which would be replaced with appropriate digital memory in a digital device). Various control buttons **430**, **420** and **410** allow conventional functions for recording, playing back, rewinding, fast forwarding, etc. Unfortunately, most dictation devices such as that shown in Fig. 4 look like dictation devices.

Dictation devices are also useful in a business social setting, particularly to allow a user a way to record the names and other information regarding new acquaintances. For instance, a user may be at a party, a professional meeting, a conference, or some other function at which they will likely meet many new people. This is sometimes referred to as social 'networking'. However, as is the case with many people, perhaps the user is not very good at remembering the names and other details regarding people they just met as they work the crowd.

In such a setting, use of a dictation device may be distracting to others, e.g., when speaking into a conventional Dictaphone or other dictation device within the view of others, possibly making the others uneasy. Moreover, use of a dictation device in a public setting, while useful, may tend to make the person using the dictation device look like a social outcast.

There is a need for an inconspicuous dictation device enabling a user to dictate in a public setting without causing uneasiness in others around them while they dictate.

### Summary Of The Invention

In accordance with the principles of the present invention, a system for recording verbal notes comprises a dictation device, and a casing enclosing said dictation device resembling a wireless telephone.

A method of recording dictation using a device resembling a wireless telephone in accordance with another aspect of the present invention comprises activating a record cycle of a dictation device from an alphanumeric keypad of the dictation device, and recording a voice passage in memory local to the dictation device.

### Brief Description Of The Drawings

Features and advantages of the present invention will become apparent to those skilled in the art from the following description with reference to the drawings, in which:
Fig. 1 shows the user interface portion of a dictation device (e.g., PLAY, RECORD, FF, and REV commands as well as the microphone and speaker) integrated into a casing resembling a wireless telephone, in accordance with the principles of the present invention.
Fig. 2 shows a detailed block diagram of the wireless telephone dictation device shown in Fig. 1.
Fig. 3 depicts a wireless connection and stored dictation transfer from one or more wireless telephone dictation devices, in accordance with the principles of the present invention.
Fig. 4 shows a conventional dictation device.

### Detailed Description Of Illustrative Embodiments

In today's world, it is common to see someone off to the side of a room, or even sometimes not off to the side of a room, engaged in a conversation using a cellular telephone. The present invention recognizes this common feature of today's society (and the social *faux pas* of dictating in public), and provides a solution to the need for an inconspicuous dictation device while in public situations, e.g., while sitting at a table with people you just met, etc. In accordance with the principles of the present invention, in a general sense, the present invention integrates a local dictation functionality into a wireless telephone handset. Thus, information can be dictated as necessary into what looks to those within the vicinity to be a wireless telephone (e.g., a cellular telephone), a common occurrence in today's world, but yet in reality is a dictation device.

A separate controller (e.g., digital signal processor (DSP)) may be utilized to provide a dictation function in accordance with the principles of the present invention, or a controller having other duties, e.g., controlling the operations of a wireless telephone, may be utilized. In such a case, the controller may be placed in a dictation mode, or in another mode such as a wireless telephone mode. In the dictation mode, the controller would allow activation of various dictation commands (e.g., RECORD, REVIEW, PLAY, FAST FORWARD).

In accordance with the principles of the present invention, the various dictation commands are activated using buttons which are integrated within buttons which resemble those of a wireless telephone. For instance, the buttons used to activate the RECORD, REVIEW, PLAY, and/or FAST FORWARD dictation commands can be integrated into separate buttons on an alphanumeric or other portion of a keypad. The keypad can serve as the dial keypad when a wireless telephone dictation device in accordance with the principles of the present invention is in a wireless telephone mode, but as dictation controls when the wireless telephone dictation device is in a dictation mode. Thus, the dictation command buttons will resemble the keys of a keypad found on many conventional wireless telephone handsets.

In an advanced embodiment, a speech-to-text conversion application program may be implemented in the wireless telephone dictation device, either internal or external to the controller handling the dictation functions. If the speech-to-text application is external to the controller, it is preferably nevertheless in communication with the controller.

Using an appropriate speech-to-text conversion application program, a user can train the application to recognize and convert to text their particular voice. Then, the user can dictate various passages for storage in the wireless telephone dictation device. All or a portion of the various passages may then be converted to textual data using the speech-to-text conversion application program.

Furthermore, the text corresponding to the converted text may be displayed on a display on the wireless telephone dictation device. The display on which the textual data is displayed preferably resembles that on conventional wireless telephones, and may even be utilized in a conventional wireless telephone fashion when the wireless telephone dictation device is in a wireless telephone mode and operating as an otherwise conventional wireless telephone (e.g., as a cellular telephone) and not as a Dictaphone or other dictation device.

To facilitate use of a relatively small display to display what could be a significant amount of text, appropriate paging and/or scrolling can be used. In this case, certain keys preferably resembling keys otherwise used in a conventional wireless telephone may be used to change pages of data forward and backward, and scroll keys may be used to scroll up, down, and even left and right on the display.

Thus, using displayed textual data corresponding to the words dictated into the wireless telephone dictation device and associated paging and/or scroll keys, the names, hobbies, etc. of recently met persons can be stored and retrieved in an inconspicuous and socially acceptable way.

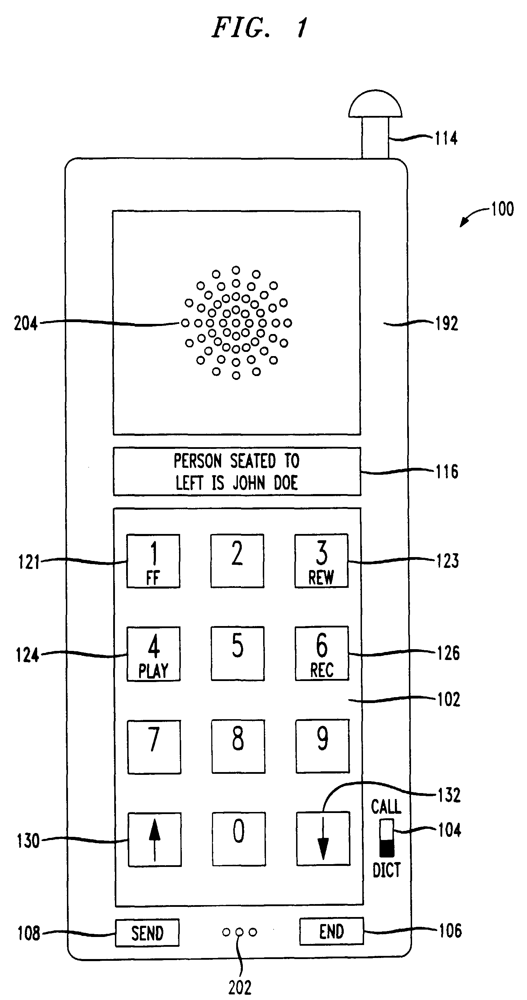

Fig. 1 shows the user interface portion of an exemplary wireless telephone dictation device **100** in accordance with the principles of the present invention. In Fig. 1, dictation commands (e.g., PLAY, RECORD, FAST FORWARD, and REWIND commands) as well as the microphone and speaker are integrated into a case which resembles that of a conventional wireless telephone.

In particular, in what would appear to the distant public in a public setting to be solely a wireless telephone (e.g., a cellular telephone), a dictation device is included, in accordance with the principles of the present invention.

In Fig. 1, a wireless telephone dictation device **100** includes both a wireless telephone and dictation device. A wireless telephone casing **192** encompasses a speaker **204**, microphone **202**, antenna **114**, display **116**, alphanumeric keypad and other keys **102**, **106** and **108**. However, in accordance with the principles of the present invention, dictation command functions are included in certain buttons otherwise used for the wireless telephone functions, e.g., keys **121**, **123**, **124**, **126**, **106** and **108**. Moreover, the wireless telephone dictation device **100** includes a mode selection switch **104** for changing operation between one mode allowing operation as an otherwise conventional wireless telephone (e.g., cellular telephone), and another mode allowing operation as a dictation device.

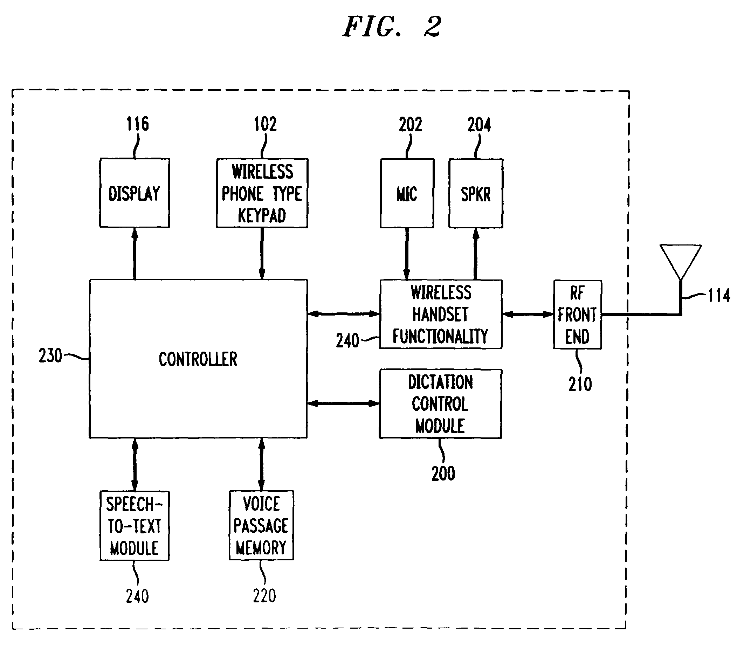

Fig. 2 shows an exemplary detailed block diagram of the wireless telephone dictation device **100** shown in Fig. 1.

In particular, a controller or other processor **230** (e.g., a microprocessor, microcontroller, or digital signal processor (DSP)) serves to control both a wireless handset functionality module **240** and a dictation control module **200**. The wireless handset functionality includes a microphone **202** and a speaker **204**, and a radio frequency (RF) front end **210** including an antenna **114**.

Preferably, the dictation control module **200** is given access to the microphone **202** and speaker **204** to allow multiple use of the same microphone **202** and speaker **204** for both dictation and wireless telephone use. In such a case, a suitable interface is provided to allow record direction communication between the microphone **202** and the voice passage memory **220**, and playback direction communication between the voice passage memory **220** and the speaker **204**. However, a separate speaker and/or microphone may be included for use by the dictation control module **200** within the principles of the present invention.

Dictated voice passages are stored in appropriate voice passage memory **220**. The voice passage memory **220** is preferably any suitable memory or storage device, and is preferably non-volatile, but certainly may be volatile. Moreover, the voice passage memory **220** may be digital memory such as Flash or ARAM memory as shown in Fig. 2, or may be a suitable cassette tape capable of storing digital or analog information. The voice passage memory **220** is preferably arranged to store a sequence of individual voice passages in such a way as to allow sequential playback of the individual voice passages as if they were stored as a single voice passage. The user input for dictation may be via the alphanumeric keypad **102** or other keys resembling those on a conventional wireless telephone, voice recognition, or even simply voice activated (VOX).

While in a dictation mode selected by the dictation mode switch 104, voice passages are spoken by the user into the microphone **202** of the wireless telephone dictation device **100** for later playback via the speaker **204**. The recorded voice passages may additionally or alternatively be displayed on the display **116**. Preferably, the display 116 is a liquid crystal display (LCD), and resembles a display which is typically used for display of a dialed telephone number on an otherwise conventional cellular telephone.

The deceiving image of wireless telephone use while actually dictating can be improved by utilizing some of the alphanumeric or other keys normally found on conventional wireless telephones to double in performance of dictation tasks. For instance, as shown in Fig. 1, the number "1" key **121** may cause the controller **230** to FAST FORWARD through the recorded voice passage stored in voice passage memory **220**, and the number "3" key **123** may cause the controller **230** to REWIND through the same recorded voice passage. Similarly, other buttons such as the number "4" button and the number "6" button may doubly serve as a PLAY and RECORD button when the wireless telephone dictation device **100** is in a dictation mode.

The volume output from the speaker **204** can be adaptive. for instance, when using the dictation device **100** in a deceptive cellular telephone appearing mode, the output from the speaker **204** is preferably commensurate with conventional telephone devices held against a user's ear. On the other hand, if using the dictation device **100** in a private setting, distant listening may be more convenient as in conventional dictation devices, and as such the output from the speaker **204** may be amplified for listening from at least several feet away. The adaptation of the volume may be automatic using, e.g., a proximity sensor to detect the proximity of a user's ear to the speaker **204**, or may be manual using an appropriate switch for manual selection by the user.

In use, the wireless telephone dictation device **100** can look quite inconspicuous to the observing public. For instance, after meeting a few people at a particular social function, a user could move to the side of the room, and appear to be engaged in a cellular telephone conversation, when in fact they are really simply dictating into the wireless telephone dictation device **100**. For example, a user can dictate something regarding a recent acquaintance such as "the gentleman in the blue blazer with the striped tie and the southern accent is Jack Smith, he is a potential client, likes to play golf and is a graduate of Duke."

Advanced features can include speech-to-text conversion and message management. For example, the controller **230** can be informed, e.g., through key presses or via voice commands, that certain individuals seated or standing nearby are clients, are potential clients, are corporate representatives, would like product samples, etc. Thereafter, recorded dictation can be converted to textual data, and stored in an appropriate memory location for scrolled and/or arranged viewing on the display **116**. For convenience, scrolling keys **130**, **132** or other display oriented controls may be implemented to allow a large amount of textual information to be viewable on the relatively small display **116**.

To add to the deception of looking like a cellular telephone call, the dictation device **100** can recognize certain speech as particular commands for, e.g., performing audio-instructed scrolling through a plurality of voice messages. The use of verbal command queues will appear to an outside viewer that the user is in a conversation where they have minimal but at least some verbal input into.

Moreover, the verbal commands can be deceptively configured. For instance, a commonly spoken phrase on a cellular telephone call such as "Yes" or "Yes, dear" may be verbally recognized and interpreted as a particular command by the user with respect to operation of the dictation device **100**. For instance, the verbal command "Yes, dear" may be interpreted to cause audible scrolling to a next message for playback by the dictation device **100**, and "Not today" might be interpreted as causing playback of the current voice message.

Activation of the display oriented controls such as the scroll keys **130**, **132** would preferably appear to others as if the user is viewing paging information. For example, prior to leaving a particular social event or dinner table, a user can appear to be viewing paging information being displayed on the display **116** of the wireless telephone dictation device **100**, when in fact the user may be prompting the controller **230** in a way to cause the name or names of the people at your dinner table to be viewable on the display **116**. Then, after viewing the names of the people a user just recently became acquainted with, they can say goodbye to the people at the table in a very personable and memorable manner, e.g., using their names, and perhaps even mentioning something about them that they just learned, e.g., their hobbies, etc.

In its simplest form, the principles of the present invention include the implementation of a dictation device within a wireless telephone casing without also including a wireless telephone capability. In this case, the dictation device appears to be a wireless telephone, and appears to be operated as if a wireless telephone using, e.g., dictation buttons implemented in what appears to others to be an alphanumeric keypad.

In addition to providing an inconspicuous way to dictate information, the wireless aspect of the wireless telephone dictation device **100** can be utilized to transmit dictated voice passages to another wireless telephone dictation device **100** and/or to a central site for incorporation into a larger database, and/or to receive recorded voice passages from a larger database or another wireless telephone dictation device **100** for storage, playback and/or display by the user.

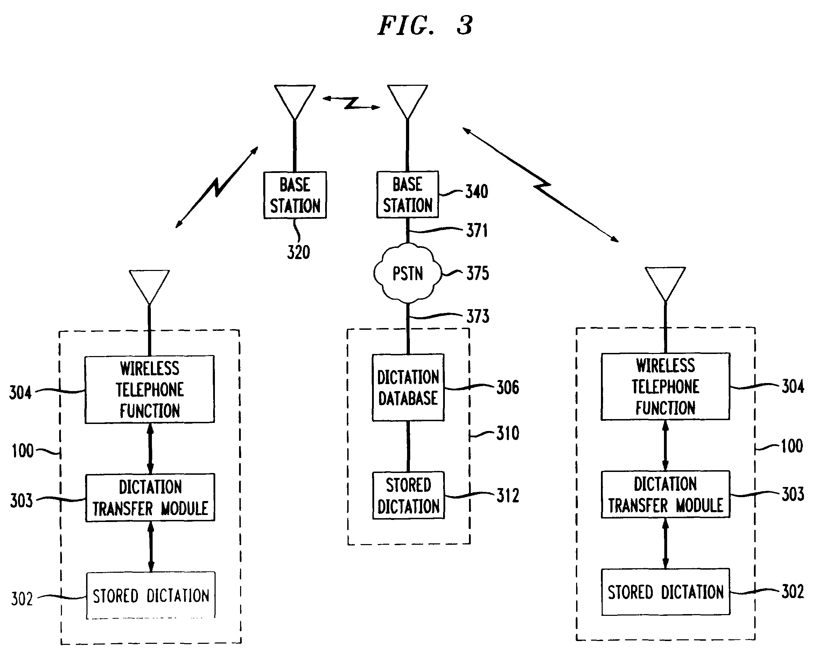

For instance, Fig. 3 depicts a wireless connection and stored dictation transfer from one or more wireless telephone dictation devices, in accordance with the principles of the present invention.

In Fig. 3, one wireless telephone dictation device **100** can communicate with another wireless telephone dictation device **100**, both in accordance with the principles of the present invention. In such a scenario, a dictation transfer module **303** operating in conjunction with the controller in the wireless telephone dictation device **100** will, upon request of a user, pass data corresponding to a dictated voice passage stored in a stored dictation memory **302** to the data modem of the conventional wireless telephone function module, and the conventional wireless telephone function module will establish the necessary telephone call to the receiving wireless telephone dictation device **100**.

In response to the telephone call, a user will recognize that a data transmission is taking place due to the usual screech heard on the telephone. However, it is also within the principles of the present invention to preceed the transmission of the dictated voice passage with a spoken announcement to a user who might answer the receiving wireless telephone saying, e.g., "a dictation message is being transmitted".

Any appropriate recipient of a dictation passage transmitted from a wireless telephone dictation device is within the principles of the present invention. For instance, a land-based recipient **310** including a dictation database application **306** and stored dictation messages **312** from one or more wireless telephone dictation devices **100** is within the principles of the present invention. As shown in the example of Fig. 3, a base station **340** of a wireless telephone system communicates with the land-based recipient **310**, e.g., using respective telephone lines **371**, **373** and an appropriate telephone call established over the public switched telephone network (PSTN) **375**. The dictation database **306** can receive and/or transmit stored dictation passages between its corresponding stored dictation memory **312** and one or more wireless telephone dictation devices **100**.

Thus, the dictation transfer module **303** operating within the controller **230** of a wireless telephone dictation device **100** may initiate the establishment of a telephone call or voice page to another wireless telephone dictation device **100** or land-based recipient **310**, and cause the transfer of data corresponding to the stored dictation passage between dictation devices. Preferably, a user at a second wireless telephone dictation device **100** will be notified of a received dictation passage (e.g., by audible alarm and/or by visual notification on the display **116**).

While the invention has been described with reference to the exemplary embodiments thereof, those skilled in the art will be able to make various modifications to the described embodiments of the invention without departing from the true spirit and scope of the invention.

## Claims

1. A system for recording verbal notes, comprising:
a dictation device; and
a casing enclosing said dictation device resembling a wireless telephone.

2. The system for recording verbal notes according to claim 1, wherein:
said wireless telephone is a cellular telephone.

3. The system for recording verbal notes according to claim 1, further comprising:
a plurality of operation keys for said dictation device resembling a telephone keypad.

4. The system for recording verbal notes according to claim 3, wherein:
at least one of said plurality of operation keys includes a key defined to cause activation of a recording function of said dictation device.

5. The system for recording verbal notes according to claim 1, further comprising:
a voice-to-text conversion device adapted to convert a voice signal spoken into said dictation device into textual data.

6. The system for recording verbal notes according to claim 5, further comprising:
memory for storing said textual data.

7. The system for recording verbal notes according to claim 5, further comprising:
a display to display said textual data.

8. The system for recording verbal notes according to claim 6, further comprising:
at least one scroll key adapted to allow scrolling of said textual data on said display.

9. A method of recording dictation using a device resembling a wireless telephone, comprising:
activating a record cycle of a dictation device from an alphanumeric keypad of said dictation device; and
recording a voice passage in memory local to said dictation device.

10. The method of recording dictation using a device resembling a wireless telephone according to claim 9, further comprising:
switching said dictation device from a wireless telephone mode to a dictation mode.

11. The method of recording dictation using a device resembling a wireless telephone according to claim 9, further comprising:
converting said voice passage to textual data.

12. The method of recording dictation using a device resembling a wireless telephone according to claim 11, further comprising:
storing said textual data in memory.

13. The method of recording dictation using a device resembling a wireless telephone according to claim 11, further comprising:
displaying words corresponding to said textual data on a display at said dictation device.

14. The method of recording dictation using a device resembling a wireless telephone according to claim 9, further comprising:
displaying a telephone number of a called party on a display at said dictation device.

15. The method of recording dictation using a device resembling a wireless telephone according to claim 9, further comprising:
adjusting a volume of audio played from said dictation device based on a proximity of a user to a speaker of said dictation device.

16. The method of recording dictation using a device resembling a wireless telephone according to claim 9, further comprising:
controlling playback of said voice passage using a verbal queue.

17. The method of recording dictation using a device resembling a wireless telephone according to claim 9, wherein:
said verbal queue is deceptively distinctive from an action to actually be taken.

18. Apparatus for recording dictation using a device resembling a wireless telephone, comprising:
means for activating a record cycle of a dictation device from an alphanumeric keypad of said dictation device; and
means for recording a voice passage in memory local to said dictation device.

19. The apparatus for recording dictation using a device resembling a wireless telephone according to claim 18, further comprising:
means for switching said dictation device from a wireless telephone mode to a dictation mode.

20. The apparatus for recording dictation using a device resembling a wireless telephone according to claim 18, further comprising:
means for converting said voice passage to textual data.

21. The apparatus for recording dictation using a device resembling a wireless telephone according to claim 20, further comprising:
memory means for storing said textual data.

22. The apparatus for recording dictation using a device resembling a wireless telephone according to claim 20, further comprising:
means for displaying words corresponding to said textual data on a display at said dictation device.

23. The apparatus for recording dictation using a device resembling a wireless telephone according to claim 18, further comprising:
means for displaying a telephone number of a called party on a display at said dictation device.
